# EUROPEAN PATENT SPECIFICATION

(11) **EP 1 895 273 B1**
(45) Date of publication and mention of the grant of the patent: **24.07.2019**
(21) Application number: 07114979.3
(22) Date of filing: 24.08.2007
(51) Int. Cl.: G01C 21/32

(54) **Data managing system, update file generating system, and data updating method**
Datenverwaltungssystem, System zur Erzeugung von Aktualisierungsdaten und Datenaktualisierungsverfahren
Système de gestion de données, système générant des fichiers actualisés et procédé de mise à jour de données

(30) Priority: 29.08.2006 JP 2006232206
(43) Date of publication of application: 05.03.2008
(73) Proprietor: Aisin AW Co., Ltd., Anjo-shi, Aichi 444-1192 (JP)
(72) Inventor: Kobayashi, Yukihiko, Okazaki-shi, Aichi 444-8564 (JP)
(74) Representative: TBK

(56) References cited:
- JP-A- 7 168 775
- JP-A- 11 265 309
- US-A- 5 873 118
- US-A1- 2003 200 207
- US-A1- 2006 005 098
- US-A1- 2006 074 547
- US-B1- 6 453 233

## Description

The present invention relates to a data managing system that is provided with a storage medium that stores data in record units, a record including a plurality of fields, and is further provided with an update device that updates data that is stored on the storage medium by reading and writing the desired data on the storage medium, an update file generating system that generates an update file that is used by this data managing system, and a data updating method in which data that is stored on the storage medium is updated by carrying out reading and writing of the desired data on the storage medium.

Navigation apparatuses that have been commercialized in recent years have a built-in high capacity hard disk serving as a storage medium. These navigation apparatuses are provided with a storage medium that stores map data related to maps, display the map data that has been read out from this storage medium on a monitor in combination with the position of the guided vehicle, which has been detected by an appropriate GPS receiver or the like, and carry out optimal route guidance and the like to a destination.

A navigation apparatus that is provided with such a hard disk as a storage medium is structured so as to update data that is stored on the storage medium by receiving the input of an update file via, for example, low capacity media or a predetermined communication network such as a mobile telephone or the like, and carrying out the reading and writing of desired data on the storage medium by using this update file. Such navigation apparatuses do not require replacing a disk such as a DVD or a CD-ROM to update data.

In addition, in such a navigation apparatus, because multiple data is stored on the storage medium in record units, where a record consists of a plurality of fields, what is termed incremental updating, in which data is updated in the record units without updating all of the data that is stored on the storage medium, such incremental updating may be carried out when data that is stored on the storage medium is updated (refer, for example, to Japanese Patent Application Publication No. JP-A-2004-287705).

Specifically, in the incremental updating, a record in which even one byte must be updated is designated as an object of updating, an update file that contains the data for an entire new record is generated, the navigation apparatus receives the input of this update file, and the data that is stored on the storage medium is updated by overwriting the entire record that is stored on the storage medium and is the object of updating by the data for the entire record that is contained in the update file. Thus, because the update file does not contain records that do not need to be updated, the volume of the update file becomes small, and consequently the amount of communication, the memory volume, and the update time for inputting this update file are reduced.

In addition, navigation apparatuses are known that are structured such that, in addition to carrying out the optimal route guidance described above, information data that is related to site information is stored on the storage medium, and search guidance for site information is carried out by displaying the information data that has been retrieved from this storage medium on a monitor (refer, for example, to Japanese Patent Application Publication No. JP-A-2005-25672, and Japanese Industrial Standards D 0810).

In such navigation apparatuses that have been provided with a hard disk, accompanying increasingly high capacity, extremely large amounts of data are stored on the storage medium, and furthermore, there are cases in which this large amount of data is frequently updated due to frequent changes in the site information and maps. Thus, even in the case in which the navigation apparatus is structured such that incremental updating, in which data is updated in record units as described above, is carried out, there are problems in that the volume of an update file that is used in this updating becomes large, and the amount of communication, the amount of memory, and furthermore, the update time for inputting the update file become enormous, and thus a further reduction in the volume of such an update file is desired.

Document JP 11 265309 A discloses a partial extraction type remote maintenance system having information of change difference including a change division, a record key and a change data item. Each item is divided by comma, which is a delimiter mark, and any mark is not set at all in particular about an item without a change. The change division shows an update, a deletion, and an addition.

Document JP 7 168775 A discloses a data transfer system that transmits information of a differential position in a bitmap format, in which "1" is set to the letter position where the compared transferred data is different, and a differential content.

In consideration of the problems described above, it is an object of the present invention to provide a technology in which a storage medium is provided that stores data in record units, a record consisting of a plurality of fields, and a data managing system that is provided with an update device that updates the data that is stored on the storage medium by carrying out reading and writing of the desired data on the storage medium, wherein the volume of the update file that is used for updating can be made as small as possible.

According to a first aspect of the present invention, there is provided a data managing system according to claim 1.

According to the first aspect described therein, the update file, which is used for updating a record that is the object of updating, contains a stored field specifying structure that specifies a field to be updated in this record, and thus, this update file does not include data for fields that do not need to be updated in the record that is an object of updating, and consequently the volume of the update file can be reduced by an amount that is equivalent to this. Thus, for example, the amount of communication, the amount of memory, and the updating time for inputting the update file can be reduced.

Specifically, in the update device, by referring to the stored field specifying structure that is contained in an update file received by the update file input device, it is possible to specify a field that is to be updated in a record that is stored on the storage medium and that is the object of updating, and it is possible to update the record that is the object of updating by writing the updated data that is contained in the update file only into the specified fields that are to be updated.

According to the first aspect described above, the update file contains the stored data flag, and the updated data is disposed in the disposition sequence of the plurality of fields in a record. Thus, it is possible to carry out the updating of a record that is the object of updating by the update device correctly and quickly.

Specifically, the update device can successively extract the updated data from an update file for a plurality of fields of a record that is an object of updating in a regular sequence, such as their disposition sequence, and thus, the extraction of the updated data from the update file can be carried out correctly and quickly. Furthermore, this extracted updated data can simply and quickly be written successively in a regular sequence, such as the disposition sequence of the plurality of fields in the record, into a field for which a stored data flag that has been read from the update file indicates that updated data is present, and thus, it is also possible to write updated data into a record correctly and quickly.

According to the first aspect described above, the update file contains the updated data flag that is separate from the stored data flag described above. Thus, when the update device carries out the updating of a record that is the object of updating, it is possible to erase the data in a field having data that needs to be erased simply and quickly in the record that is the object of updating.

Specifically, irrespective of whether a stored data flag that has been read from the update file indicates the absence of an update, the data in this field can be erased by the update device without extracting updated data from an update file for a field for which an updated data flag that has been read from this update file indicates the presence of an update. Thus, data in this field can quickly and correctly be erased in the field.

A second aspect of the data managing system according to the present invention is the point that the update file input device is structured so as to be able to receive the update file via a communication line.

According to the second aspect described above, in the update file input device, it is possible to receive the input of an update file that is used for the updating of a record that is the object of updating simply and frequently, for example, by receiving the update file via a communication line from a server that carries out the management of the information data that is stored on the storage medium.

A third aspect of the data managing system according to the present invention is the point of being structured as a navigation apparatus in which data related to information about sites and maps is stored on the storage medium in record units.

According to the third aspect described above, this data managing system can be structured as a navigation apparatus in which the data that is related to site information and maps is stored on the storage medium in record units, the data that has been extracted from this storage medium is displayed on a monitor, and the optimal route guidance to the destination and the search guidance for site information are carried out. In addition, in such a navigation apparatus, it is also possible to update a record that is the object of updating on the storage medium as described above by using an update file that does not contain the data of fields that do not need to be updated in the record that is an object of updating, and consequently the volume of the update file can be reduced by an amount that is equivalent to this.

A fourth aspect of the data managing system according to the present invention is the point that the update file contains identification data that can distinguish the records and update format data that indicates the new creation, update, and deletion of the record; and the update device writes updated data that has been extracted from the update file into a record that corresponds to the identification data of the update file and has been newly created on the storage medium in the case in which the update format data of the update file indicates the new creation; writes, on the storage medium, updated data that has been extracted from the update file into a record that corresponds to the identification data of the updated file that has been extracted in the case in which the update format data of the update file indicates the update; and deletes a record on the storage medium that corresponds to the identification data of the updated file in the case in which the update format data of the update file indicates the deletion.

According to the fourth aspect, the update device carries out what is termed the updating of a record, in which the updated data that has been extracted from an update file is written into a record on the storage medium that corresponds to the identification data described above and that is the object of updating, and in addition, the update device can also suitably carry out what is termed the new creation of a record, in which the updated data that has been extracted from an update file is written into a record that has been created on the storage medium and that corresponds to the identification data, and it can suitably carry out what is termed a deletion of a record, in which a record on the storage medium that corresponds to the identification data is deleted.

The update file generating system according to the invention for attaining the objects described above is described in claim 5.

Specifically, according to the update file generating system described therein, the record before updating that is stored on the storage medium and the record after updating that is to be stored on the storage medium are managed in advance, and the differences therebetween are extracted. Thereby, an updated file that contains the stored field specifying structure and the updated data described above can be generated comparatively simply and automatically. In addition, it is possible to update a record that is the object of updating by using an update file that has been generated in this manner in the data managing system described above.

The data updating method according to the present invention for attaining the objects described above is described in claim 6.

Specifically, according to the data updating method described therein, the update file contains the stored field specifying structure described above, and thus, similar to the data managing system that has been described above, this update file does not include the data of a field that does not need to be updated in a record that is the object of updating, and consequently, it is possible to reduce the volume of the update file by an amount equivalent to this. Thus, for example, it is possible to reduce further the amount of communication, the amount of memory, and updating time for inputting the update file.

Specifically, in the update step, it is possible to specify a field that is to be updated in a record that is stored on the storage medium and that is the object of updating by referring to the stored field specifying structure that is contained in the update file that has been received in the update file input step, and it is possible to update the record that is the object of updating by writing the updated data that is contained in the update file only into the specified fields that are to be updated.
FIG. 1 is a schematic structural drawing of a navigation apparatus in the present embodiment;
FIG. 2 is a drawing for explaining the state in which an update file is generated in which update format data indicates update;
FIG. 3 is a drawing for explaining the state in which an update file is generated in which the update format data indicates new creation;
FIG. 4 is a drawing for explaining the state in which an update file is generated in which the update format data indicates deletion;
FIG. 5 is a processing flowchart for the data updating method in the present embodiment; and
FIG. 6 is a drawing for explaining the flow of the updating by the update file on the storage medium in the present embodiment.

A navigation apparatus that is structured as a data managing system and a data updating method that is executed by this navigation apparatus will be explained with reference to the figures as an embodiment of a data managing system, an update file generating system, and a data updating method according to the present invention.

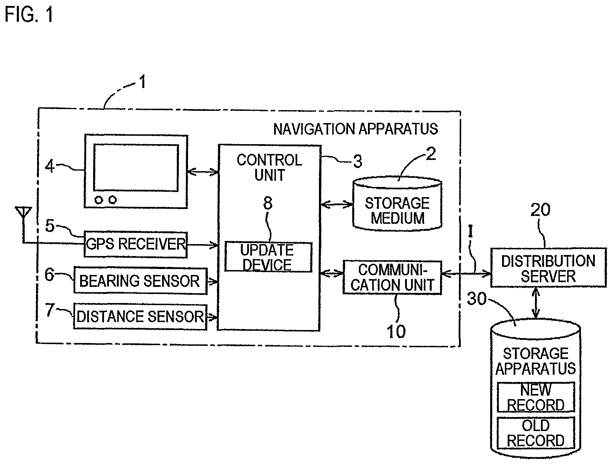

A navigation apparatus 1 that is shown in FIG. 1 is mounted in a vehicle as is well-known, and is structured such that each type of functional unit for carrying out various processes on the data that has been input by a control unit 3, which includes a CPU and the like, is implemented by hardware, software (programs), or both.

In addition, a rewritable storage medium 2, such as a hard disk, that stores map data related to maps, information data that is related to site information, and the like, is built into the navigation apparatus 1, and this storage medium 2 is structured similar to a hard disk drive so as to function as both a drive device and a hardware configuration that drives the storage medium.

This navigation apparatus 1 is structured so as to carry out optimal route guidance to a destination by displaying map data that has been read out from the storage medium 2 on a monitor 4 along with the position of the guided vehicle, which has been detected, for example, by an appropriate GPS receiver 5, and the following explanation is added concerning the structure for carrying out such optimal route guidance.

The GPS receiver 5 that receives GPS signals from GPS (Global Positioning System) satellites is provided in this navigation apparatus 1. These GPS signals are normally received every other second and output to the control unit 3. In the control unit 3, the signals from the GPS satellites that have been received by the GPS receiver 5 are analyzed, and it is thereby possible to obtain information about the position of the guided vehicle (latitude and longitude), the forward bearing, the travel speed, and the like.

In addition, a bearing sensor 6 that detects the forward bearing of the vehicle and changes in the forward bearing thereof is provided on this navigation apparatus 1. This bearing sensor 6 may be structured, for example, by a gyroscopic sensor, a geomagnetic sensor, an optical rotating sensor or a rotating-type resistance volume sensor that is installed on the rotating portion of the steering wheel, or an angle sensor that is installed on the vehicle wheel portion. In addition, the bearing sensor 6 outputs the detected results thereof to the control unit 3.

In addition, a distance sensor 7 that detects the travel distance and speed of the vehicle is provided on the navigation apparatus 1. This distance sensor 7 may be structured, for example, by a vehicle speed pulse sensor that outputs a pulse signal each time the drive shaft or the wheels or the like of the vehicle rotate by a certain amount, or structured by a combination of a yaw or G-force sensor that detects the acceleration of the vehicle and a circuit that carries out double integration on this detected acceleration. In addition, the distance sensor 7 outputs the detected results to the control unit 3.

In addition, the control unit 3 of this navigation apparatus 1 obtains map data related to map information about the vicinity of the position of the guided vehicle from the storage medium 2, carries out various types of arithmetic processing for the route guidance of the vehicle based on this map data and the current position of the vehicle that has been specified above, and outputs control commands to the monitor 4 or the like. In addition, this control unit 3 superimposes images that show the current position of the vehicle on the map images that are generated based on the map data, and displays the result in the monitor 4. In addition, reports to the driver about route guidance are made by using the monitor 4 or the like at an exact timing based on the road contours and the like that are included in the map data that is related to map information for the forward direction of the vehicle, and the current position.

This navigation apparatus 1 is structured so as to carry out search guidance for site information by displaying, in the monitor 4, information data that relates to site information that has been retrieved from the storage medium 2. The structure for carrying out this search guidance for this site information will be explained below.

On the storage medium 2, a plurality of information data that is related to the information for a plurality of sites is stored in an information data frame, and at the same time, the corresponding data for specifying the information data is stored in the corresponding data frame for each of the categories, which have been narrowed down by using, for example, search keys of the names of sites represented in 50 syllables of the Japanese language, in this example.

In addition, to carry out route guidance by search keys which represent a pronunciation of site information, the user inputs the pronunciation into a prescribed operating unit such as a touch panel-type monitor 4. Then the control unit 3 narrows down the categories using this input of the pronunciation by referring to a hierarchical structure of categories, extracts the corresponding data that is included in the narrowed categories from the corresponding data frame, and displays the names of the sites and the like that are included in this extracted data on the monitor 4.

Then, when the user selects the name of a site that has been displayed in the touch panel-type monitor 4, the control unit 3 extracts the information data that corresponds to the name of the site from the information data frame by referring to an offset to the information data that is included in the data that corresponds to the name of a site that has been selected, and displays both the detailed information about the site that is included in this extracted information data and the map data for this site and the like in the monitor 4.

Furthermore, the navigation apparatus 1 is provided with a communication unit 10 that can receive a predetermined file from a distribution server 20, which is to be described below, via a predetermined communication line I, such as the Internet. In addition, as will be described in detail below, this communication unit 10 functions as an update file input device that receives the input of an update file for updating each type of data, such as the map data, the corresponding data, and information data and the like that is stored on the storage medium 2 by receiving the input from the distribution server 20 via the communication line I.

The distribution server 20 is positioned, for example, at the manufacturer that sells the navigation apparatus 1, and consists of a computer that, on the storage medium 2 of the navigation apparatus 1, stores and manages the data before being updated and the data after being updated in a storage apparatus 30, such as a hard disk, in record units respectively as an old record and a new record.

In addition, as will be explained in detail below, this distribution server 20 is structured so as to function as an update file generating system that generates update files that include a stored field specifying structure that specifies the field that is to be updated in the record and at the same time, include updated data for the field that is to be updated by extracting the differences before and after updating in the record that is the object of updating on the storage apparatus 30. In addition, the distribution server 20 is structured such that the generated update file is transmitted to the navigation apparatus 1 that is accessed via the communication line I.

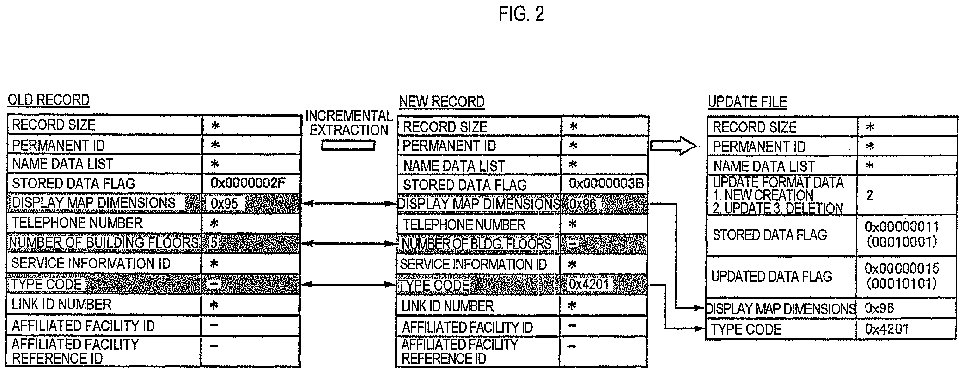

Below, the detailed structure of both the distribution server 20 that functions as an update file generating system and an update file generating method that is executed by this distribution server 20 will be explained with reference to FIG. 2 to FIG. 4. Note that FIG. 2 to FIG. 4 are figures for explaining the state in which an update file is generated from the new record and the old record.

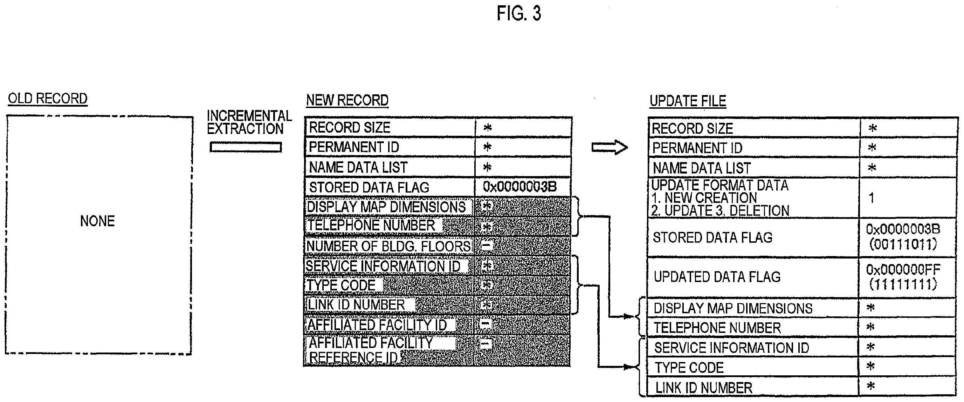

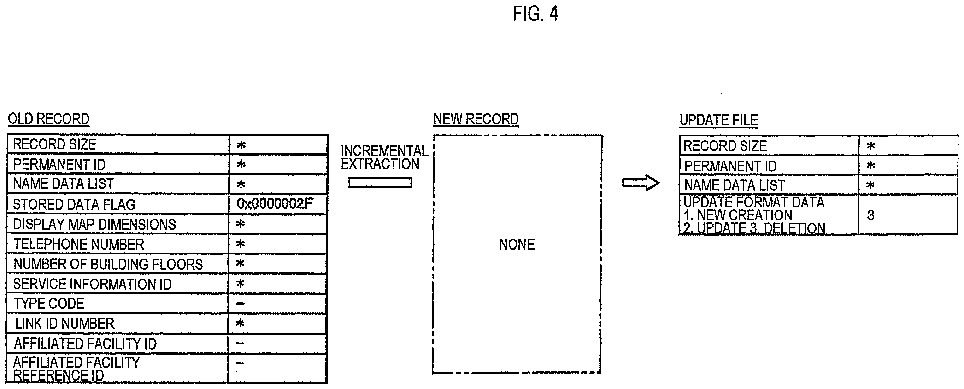

This distribution server 20 is structured such that a new record and an old record in the storage apparatus 30 are compared, for example, by using each permanent ID or name, a record for which the new record and the old record are different is designated as a record that is the object of updating, and for each record that is the object of updating, the following update files are generated on the storage medium 2: an update file for updating the data of a field of the record that is the object of updating, as shown in FIG. 2; an update file for newly creating a record that is an object of updating on the storage medium 2, as shown in FIG. 3; and an update file for deleting a record that is the object of updating on the storage medium 2, as shown in FIG. 4.

In addition, these update files include update format data that includes necessary data such as the file information (for example, "record size" and the like) and identification data (for example, "permanent ID", "name data list" and the like) that can identify a record that is the object of updating, and indicates the new generation, updating, and deleting of a record that is an object of updating described above. Below, the update file generating method for the cases in which the update format data indicates an update, a new creation, or a deletion will each be explained.

Note that in FIG. 2 to FIG. 4, the symbol "*" indicates that a certain type of data is stored in a corresponding field, and the symbol "-" indicates that data of the corresponding field is erased.

As shown in FIG. 2, in the case in which both a new record and an old record, such as a permanent ID, are both present, and the data for at least one field (for example, "display map dimension", "number of building floors", and "type code") in either of the records is different, the distribution server 20 generates an update file that designates this record as an object of updating, and the update format data is set to "2", which indicates that, on the storage medium 2, the data in this field of the record that is the object of updating is to be updated.

Furthermore, this update file is generated so as to contain, as a stored field specifying structure that specifies a field that is to be updated in a record that is the object of updating, a stored data flag that indicates the presence or absence of updated data for each of a plurality of fields in a corresponding record, and so as to dispose the updated data in the disposition sequence of the plurality of fields in the record.

Specifically, in FIG. 2, when the old record and the new record are compared, the new record differs from the old record in the fields for the "display map dimensions", the "number of building floors", and the "type code", and these fields are designated as fields that are to be updated.

In addition, among these fields, because data is present in the new record for the "display map dimensions" and the "type code", an update file is generated such that the data for the "display map dimensions" and the "type code" in the new record therefore are disposed as updated data in the disposition sequence of the plurality of fields in the record.

Furthermore, the stored data flag is set as data that shows that there is updated data for the fields for the "display map dimensions" and the "type code", and there is no updated data for any of the other fields. Specifically, the stored data flag is set to " 11", which represents in hexadecimal notation the binary notation "00010001". In this binary notation "00010001", a "1" indicates the presence of updated data and a "0" indicates the absence of updated data. These 1s and 0s are disposed in the disposition sequence of the plurality of fields (here, each bit is associated with a field, and the sequence from a upper bits to a lower bits is associated with the disposition sequence of the plurality of fields).

In addition, the stored data flag indicates what field is to be updated by what updated data in the record that is stored on the storage medium 2 and that is the object of updating, that is, the stored data flag functions as a stored field specifying structure that specifies a field that is to be updated in a record that is the object of updating.

Furthermore, the update file is generated so as to include an updated data flag that indicates the presence or absence of an update for each of the plurality of fields in a record that is an object of updating.

That is, the updated data flag is set as data that indicates that the fields of the "display map dimensions", the "number of building floors", and the "type code" are updated, and that there are no other fields to be updated. Specifically, the updated data flag is set to "15", which represents in hexadecimal notation the binary notation "00010101". In this binary notation "00010101", a "1" indicates that updating is to be carried out and a "0" indicates that updating is not to be carried out. These 1s and 0s are disposed in the disposition sequence of the plurality of fields (here, each bit is associated with a field, and the sequence from the upper bits to the lower bits is associated with the disposition sequence of the plurality of fields).

Thereby, the updated data flag that has been set in this manner indicates what fields are to be updated for a record that is stored on the storage medium 2 and is the object of updating.

In addition, the update format data is set to "2" by the update file that has been generated in this manner, and thus it is possible to confirm that a record that is already stored on the storage medium 2 is an object of updating. Furthermore, due to the stored data flag, it is possible to confirm what field is to be updated by what updated data for a record that is stored on the storage medium 2 and is an object of updating. In addition, due to the combination of the stored data flag and the updated data flag, it is possible to confirm what data in what field is to be erased.

Thus, the updated data does not include any data for the fields that do not need to be updated in the record that is the object of updating, and consequently the volume of the updated data can be reduced by an amount that is equivalent to this.

Specifically, in the present embodiment, in a field in which the stored data flag is set to " 1", which indicates that updated data is present in the update file, and the updated data flag is set to "1", which indicates that updating is to be carried out, the combination of the stored data flag and the updated data flag shows that the data in this field is to be overwritten by updated data that is present in the update file. In a field in which the stored data flag is set to "0", which indicates the absence of updated data in the update file, and the updated data flag is set to "1", which indicates that updating is to be carried out, the combination of the stored data flag and the updated data flag shows that the data in this field is to be erased. In a field in which the stored data flag is set to "0", which indicates the absence of updated data in the update file, and the updated data flag is set to "0", which indicates that updating is not to be carried out, the combination of the stored data flag and the updated data flag shows that the data in this field is to remain as is.

As shown in FIG. 3, in the case in which a new record is present and an old record is not present, the distribution server 20 generates an update file in which the corresponding record is designated as an object of updating, and the update format data is set to "1", which indicates that a record that is the object of updating is newly created on the storage medium 2.

Furthermore, this update file includes a stored data flag and an updated data flag, similar to those described above, that function as a stored field specifying structure that specifies a field to be updated in a record that is an object of updating, and disposes the updated data.

Specifically, in FIG. 3, when the old record and the new record are compared, an old record is not present, and thus all of the fields are ones in which the data of the new record differs from that of an old record, and all of these fields are fields to be updated.

In addition, among all of these fields, in the fields other than "number of building floors", "affiliated facility ID", and "affiliated facility reference ID", data is present in the new record, and thus an update file is generated such that each data that is present in these new records is designated as updated data and disposed in the disposition sequence of the plurality of fields in this record.

Specifically, the stored data flag is set as data that shows that there is updated data for fields other than the "number of building floors", "affiliated facility ID", and "affiliated facility reference ID", and that there is no updated data for the fields of the "number of building floors", "the affiliated facility ID", and the "affiliated facility reference ID". Specifically, "10111011" in binary notation is set to "3B" in hexadecimal notation.

In contrast, the updated data flag is set as data that shows that all fields are to be updated, and specifically "11111111" in binary notation is set to "FF" in hexadecimal notation.

In addition, due to the update file that has been generated in this manner, because the update format data is set to "1", it is possible to confirm that the record that is the object of updating is to be newly created on the storage medium 2. Furthermore, for a record that is the object of updating and that has been newly created on the storage medium 2, due to this stored data flag it is possible to confirm what field should store what updated data. Furthermore, due to the combination of the stored data flag and the updated data flag, it is possible to confirm the data of what field is to be erased.

Thus, the updated data does not include data for a field that is to be erased in the record that is the object of updating, and consequently volume of the updated data can be reduced by an amount that is equivalent to this.

As shown in FIG. 4, in the case in which an old record is present but a new record is not present, the distribution server 20 generates an update file in which this record is designated as an object of updating, and the update format data is set to "3", which indicates that the record that is the object of updating on the storage medium 2 is to be deleted.

Furthermore, because all of the records that are the objects of updating are deleted, this update file does not need to include the stored data flag and the updated data flag described above.

In addition, due to the update file that has been generated in the manner described above, it can be confirmed that the record that is the object of updating on the storage medium 2 is to be deleted because the update format data is set to "3".

Thus, the updated data does not include the data for any unnecessary fields in the record that is the object of updating, and consequently the volume of the updated data can be reduced by an amount that is equivalent to this.

As described above, an update file that has been generated by the distribution server 20, which functions as an update file generating system, is sent to the navigation apparatus 1 via the communication line I. In addition, the control unit 3 of this navigation apparatus 1 functions as an update device 8 by reading and writing the desired data on the storage medium 2 using the update file that has been received by the communication unit 10, and updating the data that is stored on the storage medium 2. Furthermore, this update device 8 is structured such that, for records that are the object of updating on the storage medium 2, the updated data that has been extracted from the update file is written in fields that are specified by the stored field specifying structure of the update file.

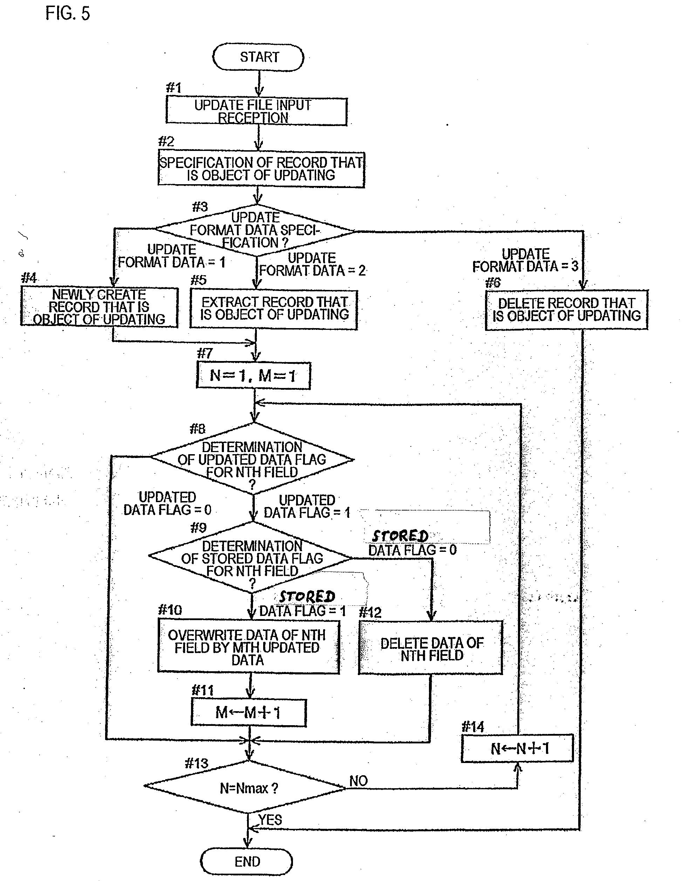

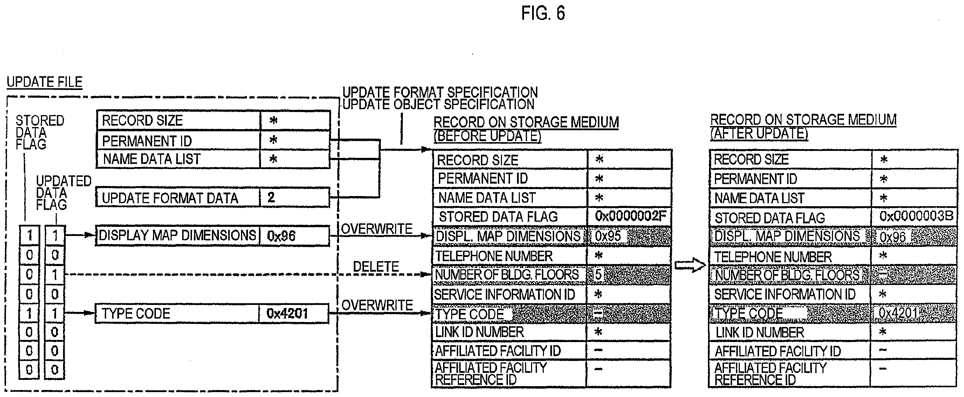

Below, the detailed structure of this update device 8 and the data updating method that is executed by this update device 8 will be explained with reference to FIG. 5 and FIG. 6. Note that FIG. 5 is a process flowchart for the data updating method, and FIG. 6 is a drawing for explaining the flow of the updating of the storage medium by the update file.

The navigation apparatus 1 starts the execution of the data updating method accompanying the execution of the update file input step (step #1), which receives the input of the update file that has been received from the communication unit 10.

Here, the update file that has been received from this communication unit 10 is an update file that has been generated by the distribution server 20 described above.

Next, the update device 8 is structured so as to specify the record that is the object of updating by using the permanent ID or the name data list or the like that is contained in the update file (step #2), then specify the update format by using the update format data that is contained in the update file (step #3), and execute appropriate processing, which is described below, on this record that is the object of updating.

More specifically, in the case in which the update format data is set to "1 ", which indicates that a record is to be newly created, an record that is an object of updating is newly created on the storage medium 2 (step #4). In the case in which the update format data is set to "2", which indicates that a record is to be updated, the record that is the object of updating and that is already stored on the storage medium 2 is extracted (step #5). In the case in which the update format data is set to "3", which indicates that a record is to be deleted, the record that is the object of updating and that is already stored on the storage medium 2 is deleted (step #6).

Note that after executing step #4 and step #5, the variable N and the variable M are set to an initial value of 1 (step #7). The variable N indicates the number of the field in the disposition sequence of the plurality of fields in the record that is the object of updating, and the variable M indicates the number in the description sequence of the updated data of the update file.

In the following step #7, the update device 8 determines the presence or absence of an update by using the updated data flag that is contained in the update file for the Nth field in the record that is the object of updating, that is, determines whether or not the data in the Nth field in the record that is the object of updating is to be updated (step #8).

Furthermore, in step #8, in the case in which the updated data flag for the Nth field indicates that there is an update ("1" in binary notation), then for the Nth field, the update device 8 determines the presence or absence of updated data by using the stored data flag that is contained in the update file, that is, determines whether or not there is updated data in the update file that is to be written into the Nth field in the record that is the object of updating (step #9).

In addition, for the Nth field (the "display map dimensions" and the "type code" in FIG. 6 correspond to this) for which it has been determined in step #8 that the updated data flag indicates the presence of an update ("1" in binary notation) and for which it has been determined in step #9 that the stored data flag indicates the presence of updated data (" 1 " in binary notation), what is termed an update step is carried out. In the update step, the data in the field is updated by being overwritten by the Mth updated data in the update file (step #10).

Note that in the case in which the Mth updated data of the update file is used in step #10, the variable M is incremented to M+1 (step #11).

In contrast, for the Nth field (the "number of building floors" in FIG. 6 corresponds to this) for which it has been determined in step #8 that the updated data flag indicates the presence of an update ("1" in binary notation) and for which it has been determined in step #9 that the stored data flag indicates the absence of updated data ("0" in binary notation), the data in the field is updated by deleting (step #12).

In addition, for the Nth field (the fields other than the "display map dimensions", the "number of building floors", and the "type code" in FIG. 6 correspond to this) for which it has been determined in step #8 that the updated data flag indicates the absence of an update ("0" in binary notation), step #9 to step #12 described above are skipped, and updating is not carried out.

In addition, it is determined whether the number N of the field is equal to the maximum Nmax (for example, 8) (step #13), and until it is determined that N is equal to Nmax, the processing in step #8 to step #12 is repeatedly executed while successively incrementing N to N+1 (step #14).

By using the data updating method described above, for the update file, the data of fields that do not need to be updated are not included in a record that is the object of updating, and consequently the volume of the update file can be reduced by an amount that is equivalent to this. For example, it is possible to reduce the amount of communication, the amount of memory, and the update time for inputting the update file.

The data managing system, the update file generating system, and the data updating method according to the present invention may be effectively used to enable making as small as possible the volume of an update file that is used for updating to update data that is stored on a storage medium, for example, in a navigation apparatus.

The input of an update file that contains a stored field specifying structure that specifies a field that is to be updated in a record and contains updated data for the field that is to be updated, is received, and, for a record, updated data that has been extracted from an update file is written into a field that has been specified by a stored field specifying structure of the update file.

### List of reference signs:

FIG. 1
   1 NAVIGATION APPARATUS
   2 STORAGE MEDIUM
   3 CONTROL UNIT
   5 GPS RECEIVER
   6 BEARING SENSOR
   7 DISTANCE SENSOR
   8 UPDATE DEVICE
   10 COMMUNICATION UNIT
   20 DISTRIBUTION SERVER
   30 STORAGE APPARATUS
   Z1 NEW RECORD
   Z2 OLD RECORD
FIG. 2
   Z3 OLD RECORD
   Z4 RECORD SIZE
   Z5 PERMANENT ID
   Z6 NAME DATA LIST
   Z7 STORED DATA FLAG
   Z8 DISPLAY MAP DIMENSIONS
   Z9 TELEPHONE NUMBER
   Z10 NUMBER OF BUILDING FLOORS
   Z11 SERVICE INFORMATION ID
   Z12 TYPE CODE
   Z13 LINK ID NUMBER
   Z14 AFFILIATED FACILITY ID
   Z15 AFFILIATED FACILITY REFERENCE ID
   Z16 INCREMENTAL EXTRACTION
   Z17 NEW RECORD
   Z18 RECORD SIZE
   Z19 PERMANENT ID
   Z20 NAME DATA LIST
   Z21 STORED DATA FLAG
   Z22 DISPLAY MAP DIMENSIONS
   Z23 TELEPHONE NUMBER
   Z24 NUMBER OF BUILDING FLOORS
   Z25 SERVICE INFORMATION ID
   Z26 TYPE CODE
   Z27 LINK ID NUMBER
   Z28 AFFILIATED FACILITY ID
   Z29 AFFILIATED FACILITY REFERENCE ID
   Z30 UPDATE FILE
   Z31 RECORD SIZE
   Z32 PERMANENT ID
   Z33 NAME DATA LIST
   Z34 UPDATE FORMAT DATA
      1. NEW CREATION
      2. UPDATE
      3. DELETION
   Z35 STORED DATA FLAG
   Z36 UPDATED DATA FLAG
   Z37 DISPLAY MAP DIMENSIONS
   Z38 TYPE CODE
FIG. 3
   Z39 OLD RECORD
   Z40 NONE
   Z41 INCREMENTAL EXTRACTION
   Z42 NEW RECORD
   Z43 RECORD SIZE
   Z44 PERMANENT ID
   Z45 NAME DATA LIST
   Z46 STORED DATA FLAG
   Z47 DISPLAY MAP DIMENSIONS
   Z48 TELEPHONE NUMBER
   Z49 NUMBER OF BUILDING FLOORS
   Z50 SERVICE INFORMATION ID
   Z51 TYPE CODE
   Z52 LINK ID NUMBER
   Z53 AFFILIATED FACILITY ID
   Z54 AFFILIATED FACILITY REFERENCE ID
   Z55 UPDATE FILE
   Z56 RECORD SIZE
   Z57 PERMANENT ID
   Z58 NAME DATA LIST
   Z59 UPDATE FORMAT DATA
      1. NEW CREATION
      2. UPDATE
      3. DELETION
   Z60 STORED DATA FLAG
   Z61 UPDATED DATA FLAG
   Z62 DISPLAY MAP DIMENSIONS
   Z63 TELEPHONE NUMBER
   Z64 SERVICE INFORMATION ID
   Z65 TYPE CODE
   Z66 LINK ID NUMBER
FIG. 4
   Z67 OLD RECORD
   Z68 RECORD SIZE
   Z69 PERMANENT ID
   Z70 NAME DATA LIST
   Z71 STORED DATA FLAG
   Z72 DISPLAY MAP DIMENSIONS
   Z73 TELEPHONE NUMBER
   Z74 NUMBER OF BUILDING FLOORS
   Z75 SERVICE INFORMATION ID
   Z76 TYPE CODE
   Z77 LINK ID NUMBER
   Z78 AFFILIATED FACILITY ID
   Z79 AFFILIATED FACILITY REFERENCE ID
   Z80 INCREMENTAL EXTRACTION
   Z81 NEW RECORD
   Z82 NONE
   Z83 UPDATE FILE
   Z84 RECORD SIZE
   Z85 PERMANENT ID
   Z86 NAME DATA LIST
   Z87 UPDATE FORMAT DATA
      1. NEW CREATION
      2. UPDATE
      3. DELETION
FIG. 5
   Z88 START
      #1 UPDATE FILE INPUT RECEPTION
      #2 SPECIFICATION OF RECORD THAT IS OBJECT OF UPDATING
      #3 UPDATE FORMAT DATA SPECIFICATION
   Z89 UPDATE FORMAT DATA = 1
      #4 NEWLY CREATE RECORD THAT IS OBJECT OF UPDATING
   Z90 UPDATE FORMAT DATA = 2
      #5 EXTRACT RECORD THAT IS OBJECT OF UPDATING
   Z91 UPDATE FORMAT DATA = 3
      #6 DELETE RECORD THAT IS OBJECT OF UPDATING
      #8 DETERMINATION OF UPDATED DATA FLAG FOR NTH FIELD
   Z92 UPDATED DATA FLAG = 0
   Z93 UPDATED DATA FLAG = 1
      #9 DETERMINATION OF STORED DATA FLAG FOR NTH FIELD
   Z94 UPDATED DATA FLAG = 0
   Z95 UPDATED DATA FLAG = 1
      #10 OVERWRITE DATA OF NTH FIELD BY MTH UPDATED DATA
      #12 DELETE DATA OF NTH FIELD
   Z96 END
FIG. 6
   Z97 UPDATE FILE
   Z98 STORED DATA FLAG
   Z99 UPDATED DATA FLAG
   Z100 RECORD SIZE
   Z101 PERMANENT ID
   Z102 NAME DATA LIST
   Z103 UPDATE FORMAT DATA
   Z104 DISPLAY MAP DIMENSIONS
   Z105 TYPE CODE
   Z106 UPDATE FORMAT SPECIFICATION
      UPDATE OBJECT SPECIFICATION
   Z107 OVERWRITE
   Z108 DELETE
   Z109 OVERWRITE
   Z110 RECORD ON STORAGE MEDIUM (BEFORE UPDATE)
   Z111 RECORD SIZE
   Z112 PERMANENT ID
   Z113 NAME DATA LIST
   Z114 STORED DATA FLAG
   Z115 DISPLAY MAP DIMENSIONS
   Z116 TELEPHONE NUMBER
   Z117 NUMBER OF BUILDING FLOORS
   Z118 SERVICE INFORMATION ID
   Z119 TYPE CODE
   Z120 LINK ID NUMBER
   Z121 AFFILIATED FACILITY ID
   Z122 AFFILIATED FACILITY REFERENCE ID
   Z123 RECORD ON STORAGE MEDIUM (AFTER UPDATE)
   Z124 RECORD SIZE
   Z125 PERMANENT ID
   Z126 NAME DATA LIST
   Z127 STORED DATA FLAG
   Z128 DISPLAY MAP DIMENSIONS
   Z129 TELEPHONE NUMBER
   Z130 NUMBER OF BUILDING FLOORS
   Z131 SERVICE INFORMATION ID
   Z132 TYPE CODE
   Z133 LINK ID NUMBER
   Z134 AFFILIATED FACILITY ID
   Z135 AFFILIATED FACILITY REFERENCE ID

## Claims

1. A data managing system (1) comprising
a storage medium (2) adapted to store data in record units, a record comprising a plurality of fields,
an update device (8) adapted to update data that is stored on the storage medium by carrying out reading and writing of desired data on the storage medium, and
an update file input device (10) adapted to receive the input of an update file that contains a stored field specifying structure that specifies a field that is to be updated in the record and that contains the updated data for the field that is to be updated; wherein
the update device is adapted to write, for the record, the updated data that has been extracted from the update file into a field that has been specified by the stored field specifying structure of the update file,
**characterized in that**
the update file contains, as the stored field specifying structure, a stored data flag that indicates the presence or absence of updated data for each of the plurality of fields in the record, and contains an updated data flag that indicates whether to update or not for each of the plurality of fields in the record and disposes the updated data in the disposition sequence of the plurality of fields in the record;
and **in that** the update device is configured to perform the following steps:
when the updated data flag indicates that updating is to be carried out, then the update device determines the presence or absence of updated data by using the stored data flag; and
when the updated data flag indicates that updating is to be carried out and the stored data flag indicates that the updated data is not present, the update device is adapted to erase the data of this field,
when the updated data flag indicates that updating is not to be carried out, the update device (8) is adapted to maintain the data of this field, and
when the updated data flag indicates that updating is to be carried out and the stored data flag indicates that the updated data is present, the update device (8) is adapted to successively extract the updated data from the update file in the disposition sequence of the corresponding updated data, and successively write the corresponding extracted updated data into a field for which the stored data flag indicates the presence of updated data in the disposition sequence of the plurality of fields in the record.

2. The data managing system (1) according to claim 1, wherein the update file input device (10) is structured so as to be able to receive the update file via a communication line (I).

3. The data managing system (1) according to any one of claims 1 to 2, structured as a navigation apparatus in which data related to information about sites and maps is stored on the storage medium (2) in record units.

4. The data managing system (1) according to any one of claims 1 to 3, wherein:
the update file contains identification data that can distinguish the records and update format data that indicates the new creation, update, and deletion of the record; and
the update device writes updated data that has been extracted from the update file into a record that corresponds to the identification data of the update file and has been newly created on the storage medium in the case in which the update format data of the update file indicates the new creation; writes, on the storage medium, updated data that has been extracted from the update file into a record that corresponds to the identification data of the updated file that has been extracted in the case in which the update format data of the update file indicates the update; and deletes a record on the storage medium that corresponds to the identification data of the updated file in the case in which the update format data of the update file indicates the deletion.

5. An update file generating system that generates an update file that is used by the data managing system (1) according to any one of claims 1 to 4, wherein:
an update file is generated that contains, as a stored field specifying structure that specifies a field that is to be updated in a corresponding record, a stored data flag that indicates the presence or absence of updated data for each of a plurality of fields in the record, and contains an updated data flag that indicates whether to update or not for each of the plurality of fields in the record and disposes the updated data in a disposition sequence of the plurality of fields in the record and updated data for a field that is to be updated by extracting the differences in the record that is the object of updating before and after the updating.

6. A data updating method that updates data that is stored on a storage medium (2) by carrying out reading and writing of desired data on the storage medium that stores data in record units, a record comprising a plurality of fields, executing the steps of:
receiving (#1), in an update file input step, the input of an update file that contains a stored field specifying structure that specifies a field that is to be updated in the record and that contains updated data for the field that is to be updated; and
writing (#10), in an update step, for the record, the updated data that has been extracted from the update file into a field that has been specified by the stored field specifying structure of the update file,
**characterized in that**
the update file contains, as the stored field specifying structure, a stored data flag that indicates the presence or absence of updated data for each of the plurality of fields in the record, and contains an updated data flag that indicates whether to update or not for each of the plurality of fields in the record and disposes the updated data in the disposition sequence of the plurality of fields in the record; further executing the steps of
when the updated data flag indicates that updating is to be carried out, determining the presence or absence of updated data by using the stored data flag,
when first the updated data flag indicates that updating is to be carried out and then the stored data flag indicates that the updated data is not present, erasing the data of this field,
when the updated data flag indicates that updating is not to be carried out, maintaining the data of this field, and
when first the updated data flag indicates that updating is to be carried out and then the stored data flag indicates that the updated data is present, successively extracting the updated data from the update file in the disposition sequence of the corresponding updated data, and successively writing the corresponding extracted updated data into a field for which the stored data flag indicates the presence of updated data in the disposition sequence of the plurality of fields in the record.

## Patentansprüche

1. Datenverwaltungssystem (1), mit
einem Speichermedium (2), das dazu angepasst ist, Daten in Aufzeichnungseinheiten zu speichern, wobei eine Aufzeichnung eine Vielzahl von Feldern aufweist,
einer Aktualisierungseinrichtung (8), die dazu angepasst ist, Daten, die auf dem Speichermedium gespeichert sind, durch Ausführen eines Lesens und Schreibens von gewünschten Daten auf dem Speichermedium zu aktualisieren, und
einer Aktualisierungsdateieingabeeinrichtung (10), die dazu angepasst ist, die Eingabe einer Aktualisierungsdatei zu empfangen, die eine Struktur zum Spezifizieren von gespeicherten Feldern enthält, die ein Feld, das in der Aufzeichnung zu aktualisieren ist, spezifiziert, und die aktualisierten Daten für das Feld, das zu aktualisieren ist, enthält; wobei
die Aktualisierungseinrichtung dazu angepasst ist, für die Aufzeichnung, die aktualisierten Daten, die von der Aktualisierungsdatei extrahiert wurden, in ein Feld zu schreiben, das durch die Struktur zum Spezifizieren eines gespeicherten Feldes der Aktualisierungsdatei spezifiziert wurde,
**dadurch gekennzeichnet, dass**
die Aktualisierungsdatei, als die Struktur zum Spezifizieren eines gespeicherten Feldes, einen Marker von gespeicherten Daten enthält, der das Vorhandensein oder Nichtvorhandensein von aktualisierten Daten für jedes der Vielzahl von Feldern in der Aufzeichnung angibt, und einen Marker von aktualisierten Daten enthält, der angibt, ob eine Aktualisierung durchzuführen ist oder nicht, für jedes der Vielzahl von Feldern in der Aufzeichnung, und die aktualisierten Daten in der Anordnungssequenz der Vielzahl von Feldern in der Aufzeichnung anordnet;
und dass die Aktualisierungseinrichtung dazu konfiguriert ist, die folgenden Schritte durchzuführen:
wenn der Marker von aktualisierten Daten angibt, dass ein Aktualisieren auszuführen ist, dann bestimmt die Aktualisierungseinrichtung das Vorhandensein oder Nichtvorhandensein von aktualisierten Daten unter Verwendung des Markers von gespeicherten Daten; und
wenn der Marker von aktualisierten Daten angibt, dass eine Aktualisierung auszuführen ist und der Marker von gespeicherten Daten angibt, dass die aktualisierten Daten nicht vorhanden sind, ist die Aktualisierungseinrichtung dazu angepasst, die Daten von diesem Feld zu löschen,
wenn der Marker von aktualisierten Daten angibt, dass eine Aktualisierung nicht auszuführen ist, ist die Aktualisierungseinrichtung (8) dazu angepasst, die Daten dieses Feldes beizubehalten, und
wenn der Marker von aktualisierten Daten angibt, dass eine Aktualisierung auszuführen ist und der Marker von gespeicherten Daten angibt, dass die aktualisierten Daten vorhanden sind, ist die Aktivierungseinrichtung (8) dazu angepasst, die aktualisierten Daten von der Aktualisierungsdatei in der Anordnungssequenz der entsprechenden aktualisierten Daten sequentiell zu extrahieren, und die entsprechenden extrahierten aktualisierten Daten sukzessive in ein Feld zu schreiben, für das der Marker von gespeicherten Daten das Vorhandensein von aktualisierten Daten in der Anordnungssequenz der Vielzahl von Feldern in der Aufzeichnung angibt.

2. Datenverwaltungssystem (1) gemäß Anspruch 1, wobei die Aktualisierungsdateieingabeeinrichtung (10) strukturiert ist, um dazu in der Lage zu sein, die aktualisierte Datei über eine Kommunikationsleitung (I) zu empfangen.

3. Datenverwaltungssystem (1) gemäß einem der Ansprüche 1 bis 2, das als eine Navigationsvorrichtung strukturiert ist, in der Daten bezüglich Informationen über Plätze und Karten auf dem Speichermedium (2) in Aufzeichnungseinheiten gespeichert sind.

4. Datenverwaltungssystem (1) gemäß einem der Ansprüche 1 bis 3, wobei:
die Aktualisierungsdatei Identifikationsdaten, die die Aufzeichnungen unterscheiden können, und Aktualisierungsformatdaten, die die neue Erzeugung, Aktualisierung und Löschung der Aufzeichnung angeben, enthält; und
die Aktualisierungseinrichtung aktualisierte Daten, die von der Aktualisierungsdatei extrahiert wurden, in eine Aufzeichnung schreibt, die den Identifikationsdaten der Aktualisierungsdatei entspricht und die auf dem Speichermedium neu erzeugt wurde, in dem Fall, in dem die Aktualisierungsformatdaten der Aktualisierungsdatei die neue Erzeugung angeben; aktualisierte Daten, die von der Aktualisierungsdatei extrahiert wurden, in eine Aufzeichnung auf dem Speichermedium schreibt, die den Identifikationsdaten der aktualisierten Datei entspricht, die extrahiert wurde, in dem Fall, in dem die Aktualisierungsformatdaten der Aktualisierungsdatei die Aktualisierung angeben; und eine Aufzeichnung auf dem Speichermedium löscht, die den Identifikationsdaten der aktualisierten Datei entspricht, in dem Fall, in dem die Aktualisierungsformatdaten der Aktualisierungsdatei die Löschung angeben.

5. Aktualisierungsdateierzeugungssystem, das eine Aktualisierungsdatei erzeugt, die durch das Datenverwaltungssystem (1) gemäß einem der Ansprüche 1 bis 4 zu verwenden ist, wobei:
eine Aktualisierungsdatei erzeugt wird, die, als eine Struktur zum Spezifizieren eines gespeicherten Feldes, die ein Feld spezifiziert, das in einer entsprechenden Aufzeichnung zu aktualisieren ist, einen Marker von gespeicherten Daten enthält, der das Vorhandensein oder Nichtvorhandensein der aktualisierten Daten für jedes der Vielzahl von Feldern in der Aufzeichnung angibt, und einen Marker von aktualisierten Daten enthält, der angibt, ob eine Aktualisierung durchzuführen ist oder nicht, für jedes der Vielzahl von Feldern in der Aufzeichnung, und die aktualisierten Daten in einer Anordnungssequenz der Vielzahl von Feldern in der Aufzeichnung und aktualisierte Daten für ein Feld, das zu aktualisieren ist, anordnet, durch Extrahieren der Unterschiede in der Aufzeichnung, die das Objekt der Aktualisierung ist, vor und nach dem Aktualisieren.

6. Datenaktualisierungsverfahren, das Daten, die auf einem Speichermedium (2) gespeichert sind, durch Ausführen von Lesen und Schreiben von gewünschten Daten auf dem Speichermedium, das Daten in Aufzeichnungseinheiten speichert, aktualisiert, wobei eine Aufzeichnung eine Vielzahl von Feldern aufweist, wobei das Verfahren die Schritte ausführt:
Empfangen (#1), in einem Aktualisierungsdateieingabeschritt, der Eingabe einer Aktualisierungsdatei, die eine Struktur zum Spezifizieren eines gespeicherten Feldes enthält, die ein Feld, das zu aktualisieren ist, in der Aufzeichnung spezifiziert, und aktualisierte Daten für das Feld enthält, das zu aktualisieren ist; und
Schreiben (#10), in einem Aktualisierungsschritt, für die Aufzeichnung, der aktualisierten Daten, die von der Aktualisierungsdatei extrahiert wurden, in ein Feld, das durch die Struktur zum Spezifizieren eines gespeicherten Feldes der Aktualisierungsdatei spezifiziert wurde,
**dadurch gekennzeichnet, dass**
die Aktualisierungsdatei, als die Struktur zum Spezifizieren eines gespeicherten Feldes, einen Marker von gespeicherten Daten enthält, der das Vorhandensein oder Nichtvorhandensein von aktualisierten Daten für jedes der Vielzahl von Feldern in der Aufzeichnung angibt, und einen Marker von aktualisierten Daten enthält, der angibt, ob eine Aktualisierung durchzuführen ist oder nicht, für jedes der Vielzahl von Feldern in der Aufzeichnung, und die aktualisierten Daten in der Anordnungssequenz der Vielzahl von Feldern in der Aufzeichnung anordnet; wobei das Verfahren weiterhin die Schritte ausführt
wenn der Marker von aktualisierten Daten angibt, dass eine Aktualisierung auszuführen ist, Bestimmen des Vorhandenseins oder Nichtvorhandenseins von aktualisierten Daten unter Verwendung des Markers von gespeicherten Daten,
wenn zuerst der Marker von aktualisierten Daten angibt, dass eine Aktualisierung auszuführen ist, und dann der Marker von gespeicherten Daten angibt, dass die aktualisierten Daten nicht vorhanden sind, Löschen der Daten von diesem Feld,
wenn der Marker von aktualisierten Daten angibt, dass eine Aktualisierung nicht auszuführen ist, Beibehalten der Daten von diesem Feld, und
wenn zuerst der Marker von aktualisierten Daten angibt, dass eine Aktualisierung auszuführen ist, und dann der Marker von gespeicherten Daten angibt, dass die aktualisierten Daten vorhanden sind, sukzessive Extrahieren der aktualisierten Daten von der Aktualisierungsdatei in der Anordnungssequenz der entsprechenden aktualisierten Daten und sukzessive Schreiben der entsprechenden extrahierten aktualisierten Daten in ein Feld, für das der Marker von gespeicherten Daten die Präsenz von aktualisierten Daten in der Anordnungssequenz der Vielzahl von Feldern in der Aufzeichnung angibt.

## Revendications

1. Système de gestion de données (1) comprenant
un support de stockage (2) adapté pour stocker des données dans des unités d'enregistrement, un enregistrement comprenant une pluralité de champs,
un dispositif de mise à jour (8) adapté pour mettre à jour des données qui sont stockées sur le support de stockage en effectuant la lecture et l'écriture de données souhaitées sur le support de stockage, et
un dispositif d'entrée de fichier de mise à jour (10) adapté pour recevoir l'entrée d'un fichier de mise à jour qui contient une structure de spécification de champ stocké qui spécifie un champ qui doit être mis à jour dans l'enregistrement et qui contient les données mises à jour pour le champ qui doit être mis à jour ; dans lequel
le dispositif de mise à jour est adapté pour écrire, pour l'enregistrement, les données mises à jour qui ont été extraites du fichier de mise à jour dans un champ qui a été spécifié par la structure de spécification de champ stocké du fichier de mise à jour,
**caractérisé en ce que**
le fichier de mise à jour contient, en tant que structure de spécification de champ stocké, un drapeau de données stockées qui indique la présence ou l'absence de données mises à jour pour chacun de la pluralité de champs dans l'enregistrement, et contient un drapeau de données mises à jour qui indique s'il faut mettre à jour ou non pour chacun de la pluralité de champs dans l'enregistrement et dispose les données mises à jour dans la séquence de disposition de la pluralité de champs dans l'enregistrement ;
et **en ce que** le dispositif de mise à jour est configuré pour effectuer les étapes suivantes :
lorsque le drapeau de données mises à jour indique qu'une mise à jour doit être effectuée, alors le dispositif de mise à jour détermine la présence ou l'absence de données mises à jour en utilisant le drapeau de données stockées ; et
lorsque le drapeau de données mises à jour indique qu'une mise à jour doit être effectuée et que le drapeau de données stockées indique que les données mises à jour ne sont pas présentes, le dispositif de mise à jour est adapté pour effacer les données de ce champ,
lorsque le drapeau de données mises à jour indique qu'une mise à jour ne doit pas être effectuée, le dispositif de mise à jour (8) est adapté pour conserver les données de ce champ, et
lorsque le drapeau de données mises à jour indique qu'une mise à jour doit être effectuée et que le drapeau de données stockées indique que les données mises à jour sont présentes, le dispositif de mise à jour (8) est adapté pour extraire successivement les données mises à jour du fichier de mise à jour dans la séquence de disposition des données mises à jour correspondantes, et écrire successivement les données mises à jour extraites correspondantes dans un champ pour lequel le drapeau de données stockées indique la présence de données mises à jour dans la séquence de disposition de la pluralité de champs dans l'enregistrement.

2. Système de gestion de données (1) selon la revendication 1, dans lequel le dispositif d'entrée de fichier de mise à jour (10) est structuré de manière à pouvoir recevoir le fichier de mise à jour via une ligne de communication (I).

3. Système de gestion de données (1) selon l'une quelconque des revendications 1 à 2, structuré comme un appareil de navigation dans lequel des données liées à des informations sur des sites et des cartes sont stockées sur le support de stockage (2) dans des unités d'enregistrement.

4. Système de gestion de données (1) selon l'une quelconque des revendications 1 à 3, dans lequel :
le fichier de mise à jour contient des données d'identification qui peuvent distinguer les enregistrements et des données de format de mise à jour qui indiquent la nouvelle création, la mise à jour, et la suppression de l'enregistrement ; et
le dispositif de mise à jour écrit des données mises à jour qui ont été extraites du fichier de mise à jour dans un enregistrement qui correspond aux données d'identification du fichier de mise à jour et a été créé nouvellement sur le support de stockage dans le cas où les données de format de mise à jour du fichier de mise à jour indiquent la nouvelle création ; écrit, sur le support de stockage, des données mises à jour qui ont été extraites du fichier de mise à jour dans un enregistrement qui correspond aux données d'identification du fichier mis à jour qui a été extrait dans le cas où les données de format de mise à jour du fichier de mise à jour indiquent la mise à jour ; et supprime un enregistrement sur le support de stockage qui correspond aux données d'identification du fichier mis à jour dans le cas où les données de format de mise à jour du fichier de mise à jour indiquent la suppression.

5. Système de génération de fichier de mise à jour qui génère un fichier de mise à jour qui est utilisé par le système de gestion de données (1) selon l'une quelconque des revendications 1 à 4, dans lequel :
un fichier de mise à jour est généré qui contient, comme une structure de spécification de champ stocké qui spécifie un champ qui doit être mis à jour dans un enregistrement correspondant, un drapeau de données stockées qui indique la présence ou l'absence de données mises à jour pour chacun d'une pluralité de champs dans l'enregistrement, et contient un drapeau de données mises à jour qui indique s'il faut mettre à jour ou non pour chacun de la pluralité de champs dans l'enregistrement et dispose les données mises à jour dans une séquence de disposition de la pluralité de champs dans l'enregistrement et des données mises à jour pour un champ qui doit être mis à jour en extrayant les différences dans l'enregistrement qui fait l'objet d'une mise à jour avant et après la mise à jour.

6. Procédé de mise à jour de données qui met à jour des données qui sont stockées sur un support de stockage (2) en effectuant la lecture et l'écriture de données souhaitées sur le support de stockage qui stocke des données dans des unités d'enregistrement, un enregistrement comprenant une pluralité de champs, exécutant les étapes consistant à :
recevoir (#1), dans une étape d'entrée de fichier de mise à jour, l'entrée d'un fichier de mise à jour qui contient une structure de spécification de champ stocké qui spécifie un champ qui doit être mis à jour dans l'enregistrement et qui contient des données mises à jour pour le champ qui doit être mis à jour ; et
écrire (#10), dans une étape de mise à jour, pour l'enregistrement, les données mises à jour qui ont été extraites du fichier de mise à jour dans un champ qui a été spécifié par la structure de spécification de champ stocké du fichier de mise à jour,
**caractérisé en ce que**
le fichier de mise à jour contient, en tant que structure de spécification de champ stocké, un drapeau de données stockées qui indique la présence ou l'absence de données mises à jour pour chacun de la pluralité de champs dans l'enregistrement, et contient un drapeau de données mises à jour qui indique s'il faut mettre à jour ou non pour chacun de la pluralité de champs dans l'enregistrement et dispose les données mises à jour dans la séquence de disposition de la pluralité de champs dans l'enregistrement ; exécutant en outre les étapes consistant à
lorsque le drapeau de données mises à jour indique qu'une mise à jour doit être effectuée, déterminer la présence ou l'absence de données mises à jour en utilisant le drapeau de données stockées,
lorsque d'abord le drapeau de données mises à jour indique qu'une mise à jour doit être effectuée et ensuite le drapeau de données stockées indique que les données mises à jour ne sont pas présentes, effacer les données de ce champ,
lorsque le drapeau de données mises à jour indique qu'une mise à jour ne doit pas être effectuée, conserver les données de ce champ, et
lorsque d'abord le drapeau de données mises à jour indique qu'une mise à jour doit être effectuée et ensuite le drapeau de données stockées indique que les données mises à jour sont présentes, extraire successivement les données mises à jour du fichier de mise à jour dans la séquence de disposition des données mises à jour correspondantes, et écrire successivement les données mises à jour extraites correspondantes dans un champ pour lequel le drapeau de données stockées indique la présence de données mises à jour dans la séquence de disposition de la pluralité de champs dans l'enregistrement.
